(19) Europäisches Patentamt
European Patent Office
Office européen des brevets

(11) **EP 2 241 070 B1**

(12) **FASCICULE DE BREVET EUROPEEN**

(45) Date de publication et mention de la délivrance du brevet:
**18.07.2012 Bulletin 2012/29**

(21) Numéro de dépôt: **09710125.7**

(22) Date de dépôt: **02.02.2009**

(51) Int Cl.:
**H04B 1/7097** *(2011.01)* **H04L 25/03** *(2006.01)*
**H04B 7/06** *(2006.01)*

(86) Numéro de dépôt international:
**PCT/FR2009/050157**

(87) Numéro de publication internationale:
**WO 2009/101317 (20.08.2009 Gazette 2009/34)**

(54) **PROCÉDÉ DE TRANSMISSION DE DONNÉES PAR SÉLECTION DE TYPE DE MODULATION, POUR UN RÉSEAU DE COMMUNICATION À MULTIPLEXAGE EN FRÉQUENCE, ET MODULATEUR ET DÉMODULATEUR ASSOCIÉS**

VERFAHREN, MODULATOR UND DEMODULATOR ZUR DATENÜBERTRAGUNG DURCH AUSWAHL EINER MODULATIONSART IN EINEM OFDM-KOMMUNIKATIONSNETZWERK

METHOD OF TRANSMITTING DATA BY SELECTION OF MODULATION TYPE, FOR A FREQUENCY DIVISION MULTIPLEXING COMMUNICATION NETWORK, AND ASSOCIATED MODULATOR AND DEMODULATOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.02.2008 FR 0850645**

(43) Date de publication de la demande:
**20.10.2010 Bulletin 2010/42**

(73) Titulaires:
• **Alcatel Lucent**
  **75007 Paris (FR)**
• **Ecole Superieure D'Electricite -SUPELEC-**
  **91192 Gif-Sur-Yvette (FR)**

(72) Inventeur: **DEBBAH, Mérouane**
  **F-75014 Paris (FR)**

(74) Mandataire: **Sciaux, Edmond et al**
  **Alcatel-Lucent International**
  **Intellectual Property & Standards**
  **32 Avenue Kléber**
  **92700 Colombes (FR)**

(56) Documents cités:
**WO-A-2004/086792    US-A1- 2006 034 383**

• **ZHENGDAO WANG ET AL: "Block Precoding for MUI/ISI-Resilient Generalized Multicarrier CDMA With Multirate Capabilities" IEEE TRANSACTIONS ON COMMUNICATIONS, vol. 49, no. 11, 1 novembre 2001 (2001-11-01), pages 2016-2027, XP011010064 NJ, US ISSN: 0090-6778**
• **ANNA SCAGLIONE ET AL: "Lagrange/ Vandermonde MUI Eliminating User Codes for Quasi-Synchronous CDMA in Unknown Multipath" IEEE TRANSACTIONS ON SIGNAL PROCESSING, vol. 48, no. 7, 1 juillet 2000 (2000-07-01), pages 2057-2073, XP011059035 NY, US ISSN: 1053-587X**
• **LIU Z ET AL: "LINEAR CONSTELLATION PRECODING FOR OFDM WITH MAXIMUM MULTIPATH DIVERSITY AND CODING GAINS" IEEE TRANSACTIONS ON COMMUNICATIONS, vol. 51, no. 3, 1 mars 2003 (2003-03-01), pages 416-427, XP001163617 NJ, US ISSN: 0090-6778**
• **ANNA SCAGLIONE ET AL: "Redundant Filterbank Precoders and Equalizers Part I: Unification and Optimal Designs" IEEE TRANSACTIONS ON SIGNAL PROCESSING, vol. 47, no. 7, 1 juillet 1999 (1999-07-01), pages 1988-2006, XP011058638 NY, US ISSN: 1053-587X**

**Description**

L'invention concerne les réseaux de communication à multiplexage en fréquence, et plus précisément la réduction des interférences qui résultent de l'utilisation simultanée d'une même bande de fréquences par plusieurs équipements de communication d'usagers connectés à de tels réseaux.

L'invention concerne tout type de réseau, filaire ou non filaire, mettant en oeuvre un multiplexage en fréquence (éventuellement de type OFDM (« Orthogonal Frequency Division Multiplex »)) sur son réseau d'accès. Par conséquent, elle concerne notamment les réseaux terrestres qui implémentent une technologie issue d'une technologie satellite, ou les réseaux de téléphonie mobile (ou cellulaire), tels que l'évolution de l'UMTS appelée LTE (« Long Term Evolution »)), ou les réseaux locaux sans fil (standards WLAN (« Wireless Local Area Network » - IEEE 802.11a, Wi-Fi (802.11g). ETSI HiperLAN/2), et WiMAX (IEEE 802.16, ETSI HiperMAN)), ou les réseaux à lignes de transmission de données, comme par exemple des lignes de type xDSL (pour « x Digital Subscriber Line ») ou des câbles ou encore des fibres optiques, ou les réseaux de diffusion terrestre et/ou satellitaire (par exemple de type DVB), et plus généralement tout type de réseau (ou infrastructure) disposant de canaux de communication sélectifs en fréquence (ou à mémoire ou encore à réponse impulsionnelle non nulle) comme décrit exemple le document US 2006/0034383.

Par ailleurs, on entend ici par « équipement de communication » tout équipement d'usager ou de réseau, filaire ou non filaire (mobile ou portable ou encore céllulaire), capable d'échanger des données avec d'autres équipements de communication (éventuellement de réseau), via un réseau à multiplexage en fréquence (éventuellement de type OFDM). Par conséquent, il pourra par exemple s'agir de téléphones fixes ou mobiles (ou cellulaires), d'ordinateurs fixes ou portables, d'assistants numériques personnels (ou PDAs), de récepteurs de contenus (comme par exemple des décodeurs, des passerelles résidentielles (ou « residential gateways ») ou des STBs (« Set-Top Boxes »)), dès lors qu'ils sont équipés de moyens de communication.

Comme le sait l'homme de l'art, dans un réseau à multiplexage en fréquence, par exemple de type OFDM, chaque usager dispose d'au moins un canal de communication (correspondant à une bande de fréquences) qui lui a été alloué et qu'il peut utiliser ou non. Il arrive souvent que des premier et second équipements (de communication) de deux usagers communiquent en parallèle avec d'autres équipements (de communication), comme par exemple des première et seconde stations de base, sur les premier et second canaux de communication qui leurs ont été respectivement alloués. Les premier et second équipements sont dits équipements primaires vis-à-vis respectivement des premier et second canaux.

Parfois, le second équipement reçoit de la première station de base les séquences d'apprentissage qu'elle a transmises au premier équipement sur le premier canal afin qu'il puisse « l'estimer », si bien que ledit second équipement est également en mesure d'estimer le premier canal et donc de l'utiliser alors qu'il n'en a pas le droit. Le second équipement est alors dit équipement secondaire vis-à-vis du premier canal. De même, le premier équipement peut avoir reçu de la seconde station de base les séquences d'apprentissage qu'elle a transmises au second équipement sur le second canal afin qu'il puisse l'estimer, si bien que ledit premier équipement est également en mesure d'estimer le second canal et donc de l'utiliser alors qu'il n'en a pas le droit. Le premier équipement est alors dit équipement secondaire vis-à-vis du second canal.

Dans la situation précitée deux cas peuvent survenir.

Dans un premier cas, le premier équipement peut transmettre des signaux sur son premier canal, mais du fait qu'il a estimé les premier et second canaux, les signaux qu'il émet peuvent être reçus par la seconde station de base. On comprendra que si le second équipement utilise en même temps son second canal pour transmettre des signaux à la seconde station de base, les signaux que cette dernière reçoit du premier équipement interfèrent avec ceux issus du second équipement, ce qui est de nature à réduire la qualité de la communication sur le second canal.

Dans un second cas, qui survient dans un réseau dit « cognitif », le second équipement peut être momentanément autorisé à utiliser le premier canal à des horaires où l'on sait que le premier équipement ne l'utilise pas habituellement. Or, si ledit premier équipement se met à utiliser son premier canal., les signaux émis par le second équipement vont interférer avec ceux émis par le premier équipement au niveau de la première station de base.

Il n'existe pas aujourd'hui de technique connue permettant de supprimer, voire au moins limiter, l'influence néfaste des interférences au niveau des démodulateurs qui sont utilisés en réception. Cela peut s'avérer problématique pour les opérateurs de réseau qui garantissent à leurs clients un certain niveau de qualité, voire même une absence d'interférence.

L'invention a donc pour but d'améliorer la situation.

Elle propose à cet effet un procédé dédié à la transmission, dans un réseau de communication à multiplexage en fréquence (éventuellement de type OFDM), de blocs de données $S_N$ de longueur N entre un équipement émetteur et un équipement récepteur sur un canal de communication à réponse impulsionnelle de longueur L.

Ce procédé de transmission comprend les étapes consistant :

i) à déterminer un vecteur H de L+1 composantes $h_k$ (k = 0 à L) représentatif de la réponse impulsionnelle du canal de communication de l'équipement émetteur vers l'équipement récepteur,

ii) à déterminer L racines complexes $a_m$ (m = 1 à L) d'un polynôme S(z) choisi, fonction des composantes $h_k$ du vecteur H,

iii) à construire une matrice dite de Vandermonde à partir des L racines complexes $a_m$, et

iv) à transmettre un signal S résultant d'une combinaison d'un bloc de données $S_N$ avec la matrice de Vandermonde.

Le procédé selon l'invention peut comporter d'autres caractéristiques qui peuvent être prises séparément ou en combinaison, et notamment :

- on peut adjoindre au bloc de données $S_N$, dans l'équipement émetteur, un préfixe de longueur L avant de le combiner à une matrice de Vandermonde de dimension (N+L)+L*L;

- on peut déterminer L racines complexes $a_m$ (m = 1 à L) d'un polynôme S(z) défini par la relation

$$S(z) = \sum_{k=0}^{L} h_k * z^k ,$$ dans laquelle les $h_k$ sont les composantes du vecteur H;

- au i) on peut déterminer le vecteur H à partir de séquences d'apprentissage transmises par l'équipement récepteur sur le canal de communication.

L'invention propose également un modulateur pour un équipement de communication propre à transmettre des blocs de données $S_N$ de longueur N à un équipement récepteur sur un canal de communication d'un réseau de communication à multiplexage en fréquence (éventuellement de type OFDM), le canal étant à réponse impulsionnelle de longueur L.

Ce modulateur comprend des moyens de traitement chargés :

- de déterminer un vecteur H de L+1 composantes $h_k$ (k = 0 à L) représentatif de la réponse impulsionnelle du canal de communication de l'équipement émetteur vers l'équipement récepteur,

- de déterminer L racines complexes $a_m$ (m = 1 à L) d'un polynôme S(z) choisi, fonction des composantes $h_k$ dudit vecteur H,

- de construire une matrice dite de Vandermonde à partir des L racines complexes $a_m$, et

- de combiner un bloc de données $S_N$ à transmettre avec la matrice de Vandermonde de manière à délivrer un signal S propre à être transmis à l'équipement récepteur.

Le modulateur selon l'invention peut comporter d'autres caractéristiques qui peuvent être prises séparément ou en combinaison, et notamment :

- ses moyens de traitement peuvent être chargés d'adjoindre au bloc de données $S_N$ un préfixe de longueur L avant de le combiner à une matrice de Vandermonde de dimension (N+L)*L ;

- ses moyens de traitement peuvent être chargés de déterminer L racines complexes $a_m$ (m = 1 à L) d'un polynôme S(z) défini par la relation $$S(z) = \sum_{k=0}^{L} h_k * z^k ,$$ dans laquelle les $h_k$ sont les composantes du vecteur H :

- ses moyens de traitement peuvent être chargés de déterminer le vecteur H à partir de séquences d'apprentissage transmises par l'équipement récepteur sur le canal de communication.

L'invention propose également un démodulateur pour un équipement de communication propre à recevoir des blocs de données $S_N$ d'au moins un équipement émetteur sur au moins un canal de communication à réponse impulsionnelle d'un réseau de communication à multiplexage en fréquence (éventuellement de type OFDM).

Ce démodulateur est agencé, lorsqu'un premier équipement émetteur veut lui transmettre sur un canal des signaux représentatifs de blocs de données qu'il a modulés avec une matrice de Vandermonde correspondant à ce canal entre le premier équipement et l'équipement de communication, pour déterminer une matrice inverse de cette matrice de Vandermonde, puis pour démoduler les signaux qui sont transmis par le premier équipement avec la matrice de Vandermonde inverse, afin de récupérer les blocs de données qu'ils représentent.

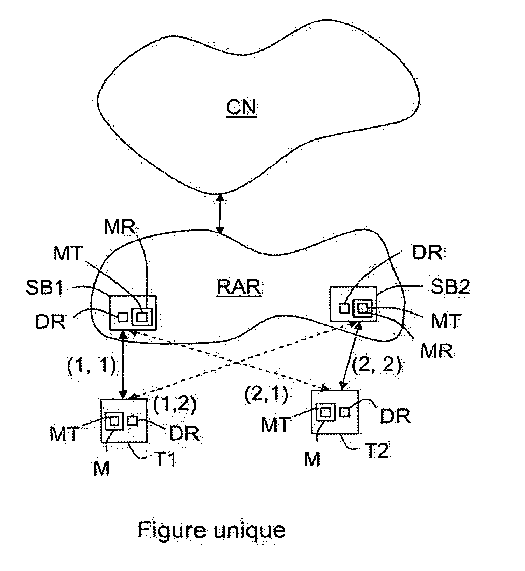

D'autres caractéristiques et avantages de l'invention apparaîtront à l'examen de la description détaillée ci-après, et du dessin annexé, sur lequel l'unique figure illustre de façon très schématique un réseau à multiplexage en fréquence comprenant des stations de base équipées chacune d'un modulateur et d'un démodulateur selon l'invention, et auquel sont connectés des équipements d'usager équipés chacun d'un modulateur selon l'invention. Le dessin annexé pourra non seulement servir à compléter l'invention, mais aussi contribuer à sa définition, le cas échéant.

L'invention a pour objet de limiter, et si possible supprimer, l'influence néfaste des interférences au niveau des démodulateurs qui sont utilisés en réception par les équipements de communication qui sont connectés à un réseau de communication comportant un réseau d'accès mettant en oeuvre un multiplexage en fréquence, éventuellement de type OFDM.

Dans ce qui suit, on considère à titre d'exemple non limitatif que le réseau est un réseau local sans fil OFDM, par exemple de type WiMAX (IEEE 802.16 ou ETSI HiperMAN). Mais, l'invention n'est pas limitée à ce type de réseau à multiplexage en fréquence. Elle concerne en effet tout type de réseau, filaire ou non filaire, mettant en oeuvre un multiplexage en fréquence (éventuellement de type OFDM) sur son réseau d'accès, et notamment les réseaux terrestres implémentant une technologie issue d'une technologie satellite, les réseaux de téléphonie mobile (ou cellulaire), tels que l'évolution de l'UMTS appelée LTE (« Long Term Evolution »)), les réseaux locaux sans fil (standards WLAN (« Wireless Local Area Network » - IEEE 802.11a, Wi-Fi (802.11g), ETSI HiperLAN/2)), les réseaux à lignes de transmission de données, comme par exemple des lignes de type xDSL (pour « x Digital Subscriber Line ») ou des câbles ou encore des fibres optiques, et les réseaux de diffusion terrestre et/ou satellitaire (par exemple de type DVB), et plus généralement tout type de réseau (ou infrastructure) disposant de canaux de communication sélectifs en fréquence (ou à mémoire ou encore à réponse impulsionnelle non nulle).

Par ailleurs, compte tenu du choix de réseau précité, on considère dans ce qui suit, à titre d'exemple non limitatif, que les équipements de communication sont des téléphones mobiles (ou cellulaires). Mais, l'invention n'est pas limitée à ce type d'équipement de communication. Elle concerne en effet tout type d'équipement d'usager ou de réseau, filaire ou non filaire (mobile ou portable ou encore cellulaire), capable d'échanger des données avec d'autres équipements de communication (éventuellement de réseau), via un réseau à multiplexage en fréquence (éventuellement de type OFDM), et notamment les téléphones fixes, les ordinateurs fixes ou portables, les assistants numériques personnels (ou PDAs), les récepteurs de contenus (comme par exemple les décodeurs, les passerelles résidentielles (ou « residential gateways ») ou les STBs (« Set-Top Boxes »)), dès lors qu'ils sont équipés de moyens de communication.

Comme cela est schématiquement et fonctionnellement illustré sur l'unique figure, un réseau local sans fil (ici de type WiMAX), comprend au moins un réseau d'accès radio RAR, généralement appelé ASN (« Access Service Network »), et auquel peuvent se connecter des équipements (de communication) d'usagers Ti, et un coeur de réseau CN couplé au réseau d'accès radio RAR. Ici i = 1 ou 2, mais cet indice i peut prendre n'importe quelle valeur supérieure ou égale à 1.

Il est rappelé qu'un réseau d'accès radio RAR de type ASN comprend notamment au moins un équipement de communication de réseau SBj, généralement appelé station de base (ou BS, pour « Base Station » - équivalent d'un multiplexeur DSLAM dans un réseau xDSL), et par lequel les équipements d'usagers Ti peuvent se connecter au réseau local sans fil. Ici j = 1 ou 2, mais cet indice j peut prendre n'importe quelle valeur supérieure ou égale à 1.

Lorsque le réseau met en oeuvre un multiplexage en fréquence (ici de type OFDM), chaque équipement d'usager Ti et chaque station de base SBj comprend un modulateur MR ou MR', chargé de moduler les blocs de données à transmettre via un canal de communication (radio) à réponse impulsionnelle du réseau d'accès (radio) RAR, et un démodulateur DR ou DR', chargé de démoduler les blocs de données transmis.

In est rappelé que dans un réseau OFDM, on attribue (ou alloue) à chaque usager client au moins un canal de communication (c'est-à-dire une bande de fréquences) qu'il peut utiliser quand il le souhaite.

Un modulateur classique d'équipement d'usager Ti est chargé de moduler des blocs de données $S_N$ de longueur N afin de délivrer des signaux $X_N^{(i)}$ qui doivent être transmis à un équipement récepteur, ici une station de base SBj, sur le canal de communication à réponse impulsionnelle de longueur L qui a été alloué à son équipement d'usager Ti. Un signal $X_N^{(i)}$ peut être défini par la matrice colonne, de dimension N, suivante :

$$X_N^{(i)} = \begin{pmatrix} x_1^{(i)} \\ x_2^{(i)} \\ \vdots \\ x_N^{(i)} \end{pmatrix} = F_N^H \begin{pmatrix} s_1^{(i)} \\ s_2^{(i)} \\ \vdots \\ s_N^{(i)} \end{pmatrix} = F_N^H s^{(i)},$$

où $F_N'' = F_N^{-1}$ est la matrice inverse de la transformée de Fourier rapide (ou FTT (« Fast Fourier Transform »)), et $s^{(i)}$ est le signal de l'équipement d'usager Ti qui est transmis par bloc de données de langueur N avec des indices de porteuse {1, 2,..., N} et qui appartient à l'ensemble $I^{N \times 1}$.

On notera que la longueur L du canal OFDM à réponse impulsionnelle est souvent égale à N/4. Mais, cela n'est pas obligatoire.

Dans la pratique, on adjoint au signal à transmettre $X_N^{(i)}$ un préfixe cyclique (ou intervalle de garde) de taille L afin de transmettre un signal $X_{N+L}^{(i)}$ défini par la matrice colonne, de dimension N+L, suivante :

$$X_{N+L}^{(i)} = \begin{pmatrix} x_{N-L+1}^{(i)} \\ \vdots \\ x_N^{(i)} \\ x_1^{(i)} \\ \vdots \\ x_N^{(i)} \end{pmatrix}.$$

On considère dans ce qui suit que l'on transmet des signaux $X_{N+L}^{(i)}$ à préfixe cyclique (ou redondance additionnelle).

Lorsqu'un premier équipement d'usager Ti (par exemple T1) veut transmettre à une première station de base SBj (par exemple SB1) un signal $X_{N+L}^{(i)}$ sur un premier canal OFDM (à réponse impulsionnelle) (1, 1) qui lui a été alloué dans une bande de fréquences, et que dans le même temps un second équipement d'usager Ti' (par exemple T2) veut transmettre à une seconde station de base SBj' (par exemple SB2) un signal $X_{N+L}^{(i')}$ sur un second canal OFDM (à réponse impulsionnelle) (2, 2) qui lui a été alloué (dans la même bande que celle du premier canal OFDM), le démodulateur de la première station de base SBj reçoit un signal $r_{SBj}^D$ qui est défini par la relation suivante :

$$r_{SBj}^D = C_{N+L}^{(i,j)} X_{N+L}^{(i)} + C_{N+L}^{(i',j)} X_{N+L}^{(i')} + n \quad (1),$$

où :

- $C_{N+L}^{(i,j)}$ représente la matrice complexe du premier canal de communication OFDM (i, j) (par exemple (1, 1)) entre le premier équipement d'usager émetteur Ti (T1) et le premier équipement récepteur (ici la première station de base) SBj (SB1), laquelle est définie par la relation :

$$C_{N+L}^{(i,j)} = \begin{pmatrix} h_L^{(i,j)} & \cdots & h_0^{(i,j)} & 0 & \cdots & 0 \\ 0 & \ddots & \ddots & \ddots & \ddots & \vdots \\ \vdots & \ddots & \ddots & \ddots & \ddots & 0 \\ 0 & \cdots & 0 & h_L^{(i,j)} & \cdots & h_0^{(i,j)} \end{pmatrix},$$

dans laquelle les éléments matriciels $h_k^{(i,j)}$ (k = 0 à L) représentent les coefficients de la réponse impulsionnelle (de longueur L+1) du premier canal de communication (i, j) entre Ti et SBj,

- $C_{N+L}^{(i',j)}$ représente la matrice complexe du premier canal de communication OFDM (i', j) (par exemple (2, 1)) entre le second équipement d'usager émetteur Ti' (T2) et le premier équipement récepteur (ici la première station de base) SBj (SB1), et
- n représente le bruit.

$C_{N+L}^{(i,j)} X_{N+L}^{(i)}$ représente donc la première partie du signal reçu du premier équipement d'usager Ti et que l'on veut démoduler en réception, tandis que $C_{N+L}^{(i',j)} X_{N+L}^{(i')}$ représente la seconde partie du signal reçu du second équipement d'usager Ti' qui vient interférer avec la première partie et dont l'invention vise à limiter, voire supprimer, les effets.

En présence d'un signal reçu $r_{SBj}^{D}$ correspondant à la relation (1), un démodulateur DR commence par supprimer les D (avec D=L) premiers symboles (redondants) des première $(C_{N+L}^{(i,j)} X_{N+L}^{(i)})$ et seconde $(C_{N+L}^{(i',j)} X_{N+L}^{(i')})$ parties du signal reçu ce qui donne le signal $r_{SRj}$, puis il applique à ce dernier la matrice de transformée de Fourier *rapide (ou FTT) $F_N$, ce qui donne le signal de sortie suivant :*

$$y_{SBj} = F_N r_{SBj} = F_N C_{N+L}^{(i,j)} X_{N+L}^{(i)} + F_N C_{N+L}^{(i',j)} X_{N+L}^{(i')} + F_N n.$$

On comprendra que si l'on veut supprimer l'influence des interférences issues du second équipement d'usager Ti', il faut que l'on ait

$$F_N C_{N+L}^{(i',j)} X_{N+L}^{(i')} = 0,$$

Pour ce faire, l'invention propose de mettre en oeuvre un nouveau procédé de transmission comportant quatre étapes dans les modulateurs MR d'au moins les équipements d'usager Ti.
Il est important de noter que ce procédé s'applique notamment :

- (A) lorsqu'un premier équipement d'usager Ti (par exemple T1) transmet à une première station de base SBj un signal $X_{N+L}^{(i)}$ sur un premier canal OFDM (i, j) (par exemple (1, 1)) qui lui a été alloué, et que dans le même temps un second équipement d'usager Ti' (par exemple T2) veut transmettre à une seconde station de base SBj' un signal $X_{N+L}^{(i')}$ sur un canal OFDM (i', j') (par exemple (2, 2)) appartenant à la même bande de fréquences que celle du premier canal OFDM, ou

- (B) lorsqu'un second équipement d'usager Ti' (par exemple T2) veut transmettre à une première station de base SBj (par exemple SB1) un signal $X_{N+L}^{(i')}$ sur un premier canal OFDM (i', j) qui a été alloué dans une bande de fréquences à un premier équipement d'usager Ti (par exemple T1) qui ne l'utilise pas.

Dans le cas (A), la bande de fréquences est donc utilisée, tandis que dans le cas (B) la bande de fréquences n'est pas utilisée. Ce cas (B) correspond à un réseau de type cognitif dans lequel on cherche à optimiser en temps réel l'utilisation des ressources disponibles, lorsqu'elles ont été préalablement allouées à des usagers qui ne les utilisent pas momentanément.

Une première étape principale du procédé selon l'invention consiste à déterminer un vecteur H de L+1 composantes $h_k$ au moyen d'un module de traitement MT du modulateur MR d'un second équipement d'usager Ti' qui veut transmettre des blocs de données $S_N$ soit vers une seconde station de base SBj', soit vers une première station de base SBj.

Ce vecteur H de composantes $h_k$ représente la réponse impulsionnelle du premier canal de communication (i', j) (éventuellement alloué à un premier équipement d'usager Ti) du second équipement d'usager Ti' vers la première station de base SBj. Ces composantes $h_k$ sont donc les éléments matriciels $h_k^{(i',j)}$ de la matrice

$$C_{N+L}^{(i',j)} X_{N+L}^{(i')}$$ (k = 0 à L).

Cette première étape principale est donc une phase dans laquelle le module de traitement MT du modulateur MR du second équipement d'usager Ti' « estime » le premier canal (i', j). Pour ce faire, il peut par exemple utiliser les séquences d'apprentissage qui sont transmises par la première station de base SBj sur le premier canal à destination du premier équipement d'usager Ti mais que son second équipement d'usager Ti' reçoit également.

Une deuxième étape principale du procédé selon l'invention consiste à déterminer (toujours au moyen du module de traitement MT du modulateur MR du second équipement d'usager Ti') L racines complexes $a_m$ (m = 1 à L) d'un polynôme S(z) choisi, qui est fonction des composantes $h_k$ (ou $h_k^{(i',j)}$) du vecteur H déterminé lors de la première étape principale.

Ce polynôme S(z) est par exemple défini par la relation $S(z) = \sum_{k=0}^{L} h_k * z^k$, dans laquelle les coefficients $h_k$ sont les composantes du vecteur H.

Il est en effet rappelé qu'un polynôme de degré L comprend L racines complexes $a_m$ (m = 1 à L). Par conséquent, déterminer les L racines complexes $a_m$ (m = 1 à L) d'un polynôme S(z), fonction des composantes $h_k$ (ou $h_k^{(i',j)}$) du vecteur H, revient à déterminer les « zéros » de la matrice $C_{N+L}^{(i',j)}$ et donc les zéros du premier canal de communication (i', j) entre le second équipement d'usager Ti' et la première station de base SBj.

Une troisième étape principale du procédé selon l'invention consiste à construire (toujours au moyen du module de traitement MT du modulateur MR du second équipement d'usager Ti') une matrice dite de Vandermonde V à partir des L racines complexes $a_m$, déterminées lors de la deuxième étape principale.

Un exemple de matrice de Vandermonde V de dimension (N+L)xL (adaptée au cas où l'on transmet un signal $X_{N+L}^{(i')}$ résultant de l'adjonction d'un préfixe cyclique au signal $X_N^{(i')}$) est donné ci-dessous :

$$V = \begin{pmatrix} 1 & \cdots & 1 \\ a_1 & \cdots & a_2 \\ a_1^2 & \cdots & a_2^2 \\ \vdots & \ddots & \vdots \\ a_1^{N+L-1} & \cdots & a_2^{N+L-1} \end{pmatrix}.$$

Cette quatrième étape principale revient donc à construire L vecteurs propres de longueur au moins égale à N pour le premier canal (i', j) (entre Ti' et SBj), chaque vecteur propre correspondant à une colonne d'une matrice de Vandermonde V construite à partir des L racines complexes $a_m$. On notera qu'en présence d'un signal $X_{N+L}^{(i')}$ résultant de l'adjonction d'un préfixe cyclique au signal $X_N^{(i')}$ les L vecteurs propres présentent une longueur N+L, tandis qu'en présence d'un signal $X_N^{(i')}$ dépourvu de préfixe cyclique les L vecteurs propres présentent une longueur N.

Il est important de noter que l'on entend ici par « matrice de Vandermonde » une matrice qui transmet des informations dans l'espace du noyau d'un canal (i', j) (entre un équipement émetteur Ti' et un équipement récepteur SBj), ce noyau étant constitué par l'ensemble des valeurs propres nulles de la matrice complexe $C_{N+L}^{(i',j)}$ représentant ledit canal (i', j). De ce fait le procédé selon l'invention peut être vu comme un mécanisme de formation de faisceau dans le domaine fréquentiel.

Une quatrième étape principale du procédé selon l'invention consiste à transmettre un signal $S$ ($S = X_{N+L}^{(i')}$) qui résulte d'une combinaison d'un bloc de données $S_N$ avec la matrice de Vandermonde V déterminée lors de la troisième étape principale. Cette combinaison est effectuée par le module de traitement MT du modulateur MR du second équipement d'usager Ti'.

Par exemple, le signal S résulte de la combinaison suivante :

$$S = X_{N+L}^{(i')} = \alpha_v V S_L^{(i')},$$

où

- $\alpha_i$ est un facteur de normalisation de la puissance, qui est par exemple donné par la relation $\alpha_v = \sqrt{\dfrac{N+L}{tr(VV^H)}}$, dans laquelle « tr » est l'opérateur trace et $V^H$ est la matrice de Vandermonde Hermitienne, et

- $S_L^{(i')}$ est la matrice colonne de dimension L qui représente le bloc de données de longueur L que peut transmettre le second équipement d'usager Ti' sur le premier canal (i', j). Il est en effet rappelé que le second équipement d'usager Ti' ne peut transmettre qu'un nombre de symboles à combiner qui est au plus égal à la longueur L du premier canal (i', j) auxquels sont adjoints des symboles de redondance pour arriver à une

Désormais, lorsque l'on se trouve dans le cas (A) précité, le démodulateur DR de la première station de base SBj reçoit toujours sur le premier canal un signal $r_{SBj}^D$ qui est défini par la relation (1) précitée ($r_{SBj}^D = C_{N+L}^{(i,j)} X_{N+L}^{(i)} + C_{N+L}^{(i',j)} X_{N+L}^{(i')} + n = C_{N+L}^{(i,j)} X_{N+L}^{(i)} + C_{N+L}^{(i',j)} S + n$), mais maintenant la seconde partie ($C_{N+L}^{(i,j)} X_{N+L}^{(i)}$) du signal reçu $r_{SBj}^D$ n'interfère plus avec la première partie ($C_{N+L}^{(i',j)} X_{N+L}^{(i')} = C_{N+L}^{(i',j)} S$) de ce signal reçu $r_{SBj}^D$. En effet, si l'on applique en réception la matrice de transformée de Fourier rapide (ou FTT)

$F_N$, à cette seconde partie on obtient une valeur nulle $\left( F_N C_{N+L}^{(i',j)} X_{N+L}^{(i')} = 0 \right)$, si bien que le signal de sortie $Y_{SBj}$ qui est délivré par le démodulateur DR de la première station de base SBj est donné par la relation

$$y_{SBj} = F_N r_{SBj} = F_N C_{N+L}^{(i,j)} X_{N+L}^{(i)} + F_N n.$$

Cela résulte du fait que le second équipement d'usager Ti' transmet ses données de bloc dans les zéros du premier canal (i', j).

Comme indiqué ci-avant, le modulateur de Vandermonde agit donc, en quelque sorte, comme un élément de mise en forme de faisceau (« ou beamformer ») dans le domaine fréquentiel.

Le module de traitement MT d'un modulateur MR selon l'invention, d'un équipement d'usager Ti' agissant en tant qu'équipement émetteur secondaire sur une bande de fréquences (éventuellement allouée à un autre équipement d'usager (primaire) Ti qui ne l'utilise pas), est agencé pour effectuer sélectivement, en fonction d'informations relatives à l'utilisation d'une bande de fréquences (issues du réseau ou d'analyses (ou « sensing ») effectuées par l'équipement d'usager Ti'), soit une modulation à base de transformée de Fourier rapide (ou FTT) inverse $F_N^H = F_N^{-1}$ (lorsque la bande de fréquences est libre), soit une modulation à base de matrice de Vandermonde V (lorsque la bande de fréquences est déjà utilisée).

On notera que le module de traitement MT d'un modulateur MR selon l'invention peut être réalisé sous la forme de circuits électroniques, de modules logiciels (ou informatiques), ou d'une combinaison de circuits électroniques et de modules logiciels.

On notera également que, lorsque la bande de fréquences allouée à un premier équipement d'usager (primaire) Ti est utilisée par ce dernier, le démodulateur DR de la première station de base SBj effectue une démodulation à base de transformée de Fourier rapide (ou FTT) $F_N$ et le démodulateur DR de la seconde station de base SBj' effectue une démodulation à base de matrice de Vandermonde inverse V[1], étant donné que le premier équipement d'usager (primaire) Ti effectue une modulation à base de transformée de Fourier rapide inverse et le second équipement d'usager (secondaire) Ti' effectue une modulation à base de matrice de Vandermonde. En revanche, lorsque la bande de fréquences allouée à un premier équipement d'usager (primaire) Ti est libre (et donc lorsqu'un second équipement d'usager (secondaire) Ti' transmet un signal $X_{N+L}^{(i')}$ sur un premier canal OFDM (i'. j) qui a été alloué au premier équipement d'usager Ti, avec l'autorisation du réseau), le démodulateur DR de la première station de base SBj effectue une démodulation à base de transformée de Fourier rapide pour démoduler le signal issu du second équipement d'usager Ti' du fait que ce dernier l'a classiquement module au moyen d'une transformée de Fourier rapide inverse.

On notera également qu'un démodulateur DR de station de base SBj' connaît la matrice de Vandermonde inverse V[1] qu'il doit utiliser pour effectuer la démodulation d'un signal reçu (modulé avec une matrice de Vandermonde V) au moyen d'un processus d'apprentissage classique similaire à celui utilisé par un modulateur MR.

On notera également que l'invention peut être avantageusement (bien que non limitativement) utilisée dans le but de réduire les interférences inter-cellulaires dans les réseaux cellulaires.

L'invention ne se limite pas aux modes de réalisation de modulateur, démodulateur et procédé de transmission décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans lequel on ne considérait au niveau d'un équipement récepteur que les interférences issues d'un unique équipement émetteur. Mais, l'invention s'applique aux situations dans lesquelles plusieurs équipements émetteurs interfèrent au niveau d'un même équipement récepteur.

**Revendications**

**1.** Procédé de transmission, dans un réseau de communication à multiplexage en fréquence, de blocs de données $S_N$ de longueur N entre un équipement émetteur (T1) et un équipement récepteur (SB2) sur un canal de communication de réponse impulsionnelle de longueur L, ledit procédé comprenant une étape consistant: i) à déterminer un vecteur H de L+1 composantes $h_k$ (k = 0 à L) représentatif de la réponse impulsionnelle dudit canal de communication de l'équipement émetteur (T1) vers l'équipement récepteur (SB2), et **caracterisé par** les étapes consistant ii) à déterminer L racines complexes $a_m$, m = 1 à L, d'un polynôme S(z) choisi en fonction desdites composantes $h_k$ dudit vecteur H, iii) à construire une matrice dite de Vandermonde à partir desdites L racines complexes $a_m$, et

iv) à transmettre un signal S résultant d'une combinaison d'un bloc de données $S_N$ avec ladite matrice de Vandermonde sur ledit canal de communication.

2. Procédé selon la revendication 1, dans lequel on adjoint audit bloc de données $S_N$, dans l'équipement émetteur (T1), un préfixe de longueur L avant de le combiner à une matrice de Vandermonde de dimension (N+L)*L.

3. Procédé selon l'une des revendications 1 et 2, dans lequel on détermine L racines complexes $a_m$, m = 1 à L, d'un polynôme S(z) défini par la relation $S(z) = \sum_{k=0}^{L} h_k * z^k$, dans laquelle les $h_k$ sont les composantes du vecteur H.

4. Procédé selon l'une des revendications 1 à 3, dans lequel on détermine dans l'étape i) le vecteur H à partir de séquences d'apprentissage transmises par ledit équipement récepteur (SB2) sur ledit canal de communication.

5. Modulateur (MR) pour un équipement de communication (T1) propre à transmettre des blocs de données $S_N$ de longueur N à un équipement récepteur (SB2) sur un canal de communication d'un réseau de communication à multiplexage en fréquence, ledit canal présenté par une réponse impulsionnelle de longueur L, ledit modulateur (MR) comprenant des moyens de traitement (MT) agencés pour i) déterminer un vecteur H de L+1 composantes $h_k$, k = 0 à L, représentatif de la réponse impulsionnelle dudit canal de communication de l'équipement émetteur (T1) vers l'équipement récepteur (SB2), ii) déterminer L racines complexes $a_m$, m = 1 à L, d'un polynôme S(z) choisi en fonction desdites composantes $h_k$ dudit vecteur H, iii) construire une matrice dite de Vandermonde à partir desdites L racines complexes $a_m$, et iv) combiner un bloc de données $S_N$ avec ladite matrice de Vandermonde de manière à délivrer un signal S propre à être transmis audit équipement récepteur (S82) sur ledit canal de communication.

6. Modulateur selon la revendication 5, dans lequel lesdits moyens de traitement (MT) sont agencés pour adjoindre au bloc de données $s_N$ un préfixe de longueur L avant de le combiner à une matrice de Vandermonde de dimension (N+L)*L.

7. Modulateur selon l'une des revendications 5 et 6, dans lequel lesdits moyens de traitement (MT) sont agencés pour déterminer L racines complexes $a_m$, m = 1 à L, d'un polynôme S(z) défini par la relation $S(z) = \sum_{k=0}^{L} h_k * z^k$, dans laquelle les $h_k$ sont les composantes du vecteur H.

8. Modulateur selon l'une des revendications 5 à 7, dans lequel lesdits moyens de traitement (MT) sont agencés pour déterminer ledit vecteur H à partir de séquences d'apprentissage transmises par ledit équipement récepteur (SB2) sur ledit canal de communication.

9. Démodulateur (DR) pour un équipement de communication (SBj) propre à recevoir des blocs de données $S_N$ d'au moins un équipement émetteur (Ti) sur au moins un canal de communication à réponse impulsionnelle d'un réseau de communication à multiplexage en fréquence, ledit démodulateur (DR) étant agencé, lorsqu'un premier équipement émetteur (T1) veut lui transmettre sur un canal des signaux représentatifs de blocs de données modulés avec une matrice de Vandermonde (V) correspondant audit canal entre ledit premier équipement (T1) et ledit équipement de communication (SBj) ladite matrice étant construite en utilisation les étapes du procédé selon la revendication 1, pour déterminer une matrice ($V^1$) inverse de ladite matrice de Vandermonde (V), puis pour démoduler lesdits signaux transmis par ledit premier équipement (T1) avec ladite matrice de Vandermonde inverse ($V^1$) de manière à récupérer lesdits blocs de données qu'ils représentent.

10. Utilisation des procédé de transmission selon les revendications 1 à 4, modulateur (MR) selon les revendications 5 à 8 et démodulateur (DR) selon la revendication 9, dans le cas d'un réseau de communication à multiplexage en fréquence de type de multiplexage par répartition orthogonale de fréquence, nommé OFDM.

**Claims**

1. A method for transmitting, in a frequency-division multiplexing communication network, data blocks $S_N$ of length N between a sending device (T1) and a receiving device (SB2) on a communication channel with an impulse response of length L, said method comprising a step consisting of: i) determining a vector H of L+1 components $h_k$ (k = 0 to L) representative of the impulse response of said communication channel from the sending device (T1) to the receiving device (SB2), and **characterized by** the steps consisting of ii) determining L complex roots $a_m$, m = 1 to L, of a polynomial S(z) chosen as a function of said components $h_k$ of said vector H, iii) building a so-called Vandermonde matrix based on said L complex roots $a_m$, and iv) transmitting a signal S resulting from a combination of a data block $S_N$ with said Vandermonde matrix over said communication channel.

2. A method according to claim 1, wherein a prefix of length L is added to said data block $S_N$, within the sending device (T1), before being combined with a (N+L)*L Vandermonde matrix.

3. A method according to any one of claim 1 or 2, further comprising the determining of L complex roots $a_m$, m = 1 to L, of a polynomial S(z) defined by the relationship $S(z) = \sum_{k=0}^{L} h_k * z^k$ , wherein the $h_k$ are the components of the vector H.

4. A method according to any one of claims 1 to 3, wherein in step i) the vector H is determined based on learning sequences transmitted by said receiving device (SB2) over said communication channel.

5. A modulator (MR) for a communication device (T1) capable of transmitting data blocks $S_N$ of length N to a receiving device (SB2) over a communication channel of a frequency-division multiplexing communication network, said channel presented by an impulse response of length L, said modulator (MR) comprising processing means (MT) adapted for i) determining a vector H of L+1 components $h_k$, k = 0 to L, representative of the impulse response of said communication channel from the sending device (T1) to the receiving device (SB2), ii) determining L complex roots $a_m$, m = 1 to L, of a polynomial S(z) chosen as a function of said components $h_k$ of said vector H, iii) building a so-called Vandermonde matrix based on said L complex roots $a_m$, and iv) combine a data block $S_N$ with said Vandermonde matrix so as to deliver a signal S capable of being transmitted to said receiving device (SB2) over said communication channel.

6. A modulator according to claim 5, wherein said processing means (MT) are adapted for adding to the data block $S_N$ a prefix of length L before combining it to a (N+L)*L Vandermonde matrix.

7. A modulator according to any one of claims 5 or 6, wherein said processing means (MT) are further adapted for determining L complex roots $a_m$, m = 1 to L, of a polynomial S(z) defined by the relationship $S(z) = \sum_{k=0}^{L} h_k * z^k$ , wherein the $h_k$ are components of the vector H.

8. A modulator according to one of the claims 5 to 7, wherein said processing means (MT) are adapted for determining said vector H based on learning sequences transmitted by said receiving device (SB2) over said communication channel.

9. A demodulator (DR) for a communication device (SBj) capable of receiving data blocks SN from at least one sending device (Ti) over at least one impulse-response communication channel of a frequency-division multiplexing communication network, said demodulator (DR) being adapted for, whenever a sending device (T1) wishes to transmit to it over a channel signals representative of data blocks modulated with a Vandermonde matrix (V) corresponding to said channel between said first device (T1) and said communication device (Sbj), said matrix being built using the steps of the method of claim 1, determining an inverse matrix ($V^{-1}$) of said Vandermonde matrix (V), then for demodulating said signals transmitted by said first device (T1) with said inverse Vandermonde matrix ($V^{-1}$) in such a way as to retrieve said data blocks that they represent.

10. Use of the transmission methods according to claims 1 to 4, modulator (MR) according to claims 5 to 8, and demodulator (DR) according to claim 9, in an orthogonal frequency-division multiplexing (also known as OFDM) communication network.

**Patentansprüche**

1. Verfahren zur Übertragung, in einem Frequenzmultiplex-Kommunikationsnetzwerk, von Datenblöcken $S_N$ einer Länge von N zwischen einer Sendeeinrichtung (T1) und einer Empfangseinrichtung (SB2) auf einem Kommunikationskanal mit einer Impulsantwort einer Länge von L, wobei das besagte Verfahren einen Schritt umfasst, welcher darin besteht: i) Einen Vektor H mit L+1 Komponenten $h_k$ (k = 0 bei L), welcher für die Impulsantwort des besagten Kommunikationskanals der Sendeeinrichtung (T1) an die Empfangseinrichtung (SB2) repräsentativ ist, zu bestimmen, und **gekennzeichnet ist durch** die Schritte, die darin bestehen, ii) L komplexe Wurzeln $a_m$, m = 1 bei L, eines Polynoms S(z), gewählt in Abhängigkeit von den besagten Komponenten $h_k$ des besagten Vektors H, zu bestimmen, iii) ausgehend von den besagten L komplexen Wurzeln $a_m$ eine sogenannte Vandermonde-Matrix zu erstellen, und iv) ein Signal S, welches aus einer Kombination eines Datenblocks $S_N$ mit der besagten Vandermonde-Matrix auf dem besagten Kommunikationskanal resultiert, zu übertragen.

2. Verfahren nach Anspruch 1, wobei man dem besagten Datenblock $S_N$, im Sendegerät (T1), ein Präfix einer Länge von L hinzufügt, bevor dieser mit einer Vandermonde-Matrix einer Dimension von (N+L)*L kombiniert wird.

3. Verfahren nach einem der Ansprüche 1 und 2, wobei man L komplexe Wurzeln $a_m$, m = 1 bei L, eines Polynoms S (z), definiert durch die Beziehung $S(z) = \sum_{k=0}^{L} h_k * z^k$ , in welcher die $h_k$ die Komponenten des Vektors H sind, bestimmt.

4. Verfahren nach einem der Ansprüche 1 bis 3, wobei man in Schritt i) den Vektor H ausgehend von den von der besagten Empfangseinrichtung (SB2) auf dem besagten Kommunikationskanal übertragenen Lernsequenzen bestimmt.

5. Modulator (MR) für eine Kommunikationsvorrichtung (T1), welche geeignet ist, Datenblöcke $S_N$ einer Länge von N auf einem Kommunikationskanal eines Frequenzmultiplex-Kommunikationsnetzwerks an eine Empfangseinrichtung (SB2) zu übertragen, wobei der besagte Kanal von einer Impulsantwort einer Länge von L dargestellt wird, wobei der besagte Modulator (MR) Verarbeitungsmittel (MT) umfasst, welche dazu ausgelegt sind, i) einen Vektor H mit L+1 Komponenten $h_k$, k = 0 bei L, welcher für die Impulsantwort des besagten Kommunikationskanals der Sendeeinrichtung (T1) an die Empfangseinrichtung (SB2) repräsentativ ist, zu bestimmen, ii) L komplexe Wurzeln $a_m$, m = 1 bei L, eines Polynoms S(z), ausgewählt in Abhängigkeit von den besagten Komponenten $h_k$ des besagten Vektors H, zu bestimmen iii) ausgehend von den besagten L komplexen Wurzeln $a_m$ eine sogenannte Vandermonde-Matrix zu bestimmen und iv) einen Datenblock $S_N$ mit der besagten Vandermonde-Matrix zu kombinieren, um ein für die Übertragung an die besagte Empfangseinrichtung (SB2) auf dem besagten Kommunikationskanal geeignetes Signal S zu liefern.

6. Modulator nach Anspruch 5, wobei die besagten Verarbeitungsmittel (MT) dazu ausgelegt sind, dem Datenblock $S_N$ ein Präfix einer Länge von L hinzuzufügen, bevor er mit einer Vandermonde-Matrix einer Dimension von (N+L) *L kombiniert wird.

7. Modulator nach einem der Ansprüche 5 und 6, wobei die besagten Verarbeitungsmittel (MT) dazu ausgelegt sind, L komplexe Wurzeln $a_m$, m = 1 bei L, eines Polynoms S(z), definiert durch die Beziehung $S(z) = \sum_{k=0}^{L} h_k * z^k$ , in welcher die $h_k$ die Komponenten des Vektors H sind, zu bestimmen.

8. Modulator nach einem der Ansprüche 5 bis 7, wobei die besagten Verarbeitungsmittel (MT) dazu ausgelegt sind, den besagten Vektor H ausgehend von von der besagten Empfangseinrichtung (SB2) auf dem besagten Kommunikationskanal übertragenen Lernsequenzen zu bestimmen.

9. Demodulator (DR) für eine Kommunikationsvorrichtung (SBj), welche geeignet ist, Datenblöcke $S_N$ von mindestens einer Sendeeinrichtung (Ti) auf mindestens einem Kommunikationskanal mit Impulsantwort eines Frequenzmultiplex-Kommunikationsnetzwerks zu empfangen, wobei der besagte Demodulator (DR) dazu ausgelegt ist, wenn ihm eine erste Sendeeinrichtung (T1) auf einem Kanal Signale, welche für mit einer Vandermonde-Matrix (V) modulierte

**EP 2 241 070 B1**

Datenblöcke repräsentativ sind, welche dem besagten Kanal zwischen der besagten ersten Einrichtung (T1) und der besagten Kommunikationsvorrichtung (SBj) entspricht, übertragen will, wobei die besagte Matrix unter Verwendung der Schritte des Verfahren gemäß Anspruch 1 erstellt wird, um eine inverse Matrix ($V^{-1}$) der besagten Vandermonde-Matrix (V) zu bestimmen, und anschließend die besagten von der besagten ersten Einrichtung (T1) mit der besagten inversen Vandermonde-Matrix ($V^{-1}$) übertragenen Signale zu demodulieren, um die besagten von diesen dargestellten Datenblöcke rückzugewinnen.

10. Verwenden der Übertragungsverfahren gemäß den Ansprüchen 1 bis 4, Modulator (MR) gemäß den Ansprüchen 5 bis 8, und Demodulator (DR) gemäß Anspruch 9, im Fall eines Frequenzmultiplex-Kommunikationsnetzwerks vom Typ orthogonales Frequenzmultiplexverfahren, OFDM genannt.

Figure unique

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060034383 A